# EUROPÄISCHE PATENTSCHRIFT

(11) **EP 0 894 243 B1**
(45) Veröffentlichungstag und Bekanntmachung des Hinweises auf die Patenterteilung: **03.03.2004**
(21) Anmeldenummer: 97920597.8
(22) Anmeldetag: 11.04.1997
(51) Int. Cl.: G01C 23/00

(54) **VERFAHREN UND EINRICHTUNG ZUR DARSTELLUNG VON FLUGFÜHRUNGSINFORMATION**
PROCESS AND SYSTEM FOR REPRESENTING FLIGHT GUIDING INFORMATION
PROCEDE ET DISPOSITIF POUR LA REPRESENTATION D'INFORMATIONS DE GUIDAGE EN VOL

(30) Priorität: 15.04.1996 DE 19614801
(43) Veröffentlichungstag der Anmeldung: 03.02.1999
(73) Patentinhaber: Diehl Avionik Systeme GmbH, 88641 Überlingen (DE)
(72) Erfinder: PURPUS, Matthias, D-64297 Darmstadt (DE); VON VIEBAHN, Harro, D-64401 Gro -Bieberau (DE)
(74) Vertreter: Gornott, Dietmar, Dipl.-Ing.
(86) Internationale Anmeldenummer: PCT/DE1997/000747
(87) Internationale Veröffentlichungsnummer: WO 1997/039311

(56) Entgegenhaltungen:
- WO-A-94/25827
- WO-A-94/25828
- DE-A- 3 930 862
- FR-A- 2 666 428

## Beschreibung

### Technisches Gebiet

Die Erfindung betrifft ein Verfahren und eine Einrichtung zur Darstellung von Flugführungsinformation eines Flugzeugs, wobei mit Hilfe einer Bildwiedergabeeinrichtung eine räumliche Darstellung des Flugraums mit mindestens einem Horizont und der vorausberechneten Flugbahn des Flugzeugs erfolgt und wobei die Darstellung der vorausberechneten Flugbahn die vorausberechnete Position und die vorausberechnete Lage des Flugzeugs zu verschiedenen Zeitpunkten umfaßt.

### Stand der Technik

Ein solches Verfahren ist durch die deutsche Patentanmeldung DE 39 30 862 A1 der Anmelderin bekanntgeworden. Es verbessert den Prozeß der Informationsvermittlung durch ein den natürlichen Sehgewohnheiten nachempfundenes Bild, so daß auch die mentale Belastung des Piloten verringert wird. Ferner stellt die verwendete Symbolik eine integrale Information dar, die die Kontrolle von Lage und Bewegung im Raum und das Einhalten von Flugbahnvorgaben und Kurzzeitnavigation ermöglicht. Die qualitativen Informationen treten bedingt durch die Darstellungsweise in den Vordergrund und werden durch die notwendigen quantitativen Anzeigen ergänzt. Eine Erleichterung der Aufgabe des Piloten wird durch eine Zusammenfassung der einzelnen für die Flugphase relevanten Informationen in einem ergonomisch günstig gestalteten Gesamtbild erreicht.

Ferner ermöglicht das bekannte Verfahren eine vorausschauende Steuerung des Flugzeugs, wobei die Folgen einer Steuereingabe direkt erkennbar sind. Mögliche unerwünschte Entwicklungen - beispielsweise ein Überziehen beim Start - können frühzeitig erkannt und vermieden werden, bevor sie tatsächlich eintreten.

Bei dem bekannten Verfahren wird vorzugsweise die vorausberechnete Flugbahn durch mehrere Symbole in Form von jeweils einer dreieckigen Scheibe endlicher Dicke gebildet. Diese Form der Symbole ermöglicht in besonders einfacher Weise das Erkennen von Lage und Richtung des Flugzeugs zu den jeweiligen Zeitpunkten, erfordert jedoch, um eine günstige Blickrichtung auf die Symbole zu haben, eine Anordnung der Symbole deutlich unterhalb der Augenhöhe des Piloten. Dadurch wird einerseits der Blick auf das ebenfalls dargestellte Gelände eingeschränkt und andererseits bei geringen Flughöhen die voraussichtliche Flugbahn unterhalb der Bodenhöhe dargestellt.

Aufgabe der vorliegenden Erfindung ist es, das bekannte Verfahren derart weiterzubilden, daß eine räumliche Erkennbarkeit der Symbole bei gleichzeitigem möglichst ungehinderten Blick auf das dargestellte Gelände und bei realistischem Höheneindruck der Flugbahn-Darstellung möglich ist.

### Darstellung der Erfindung

Diese Aufgabe wird bei dem erfindungsgemäßen Verfahren dadurch gelöst, daß die Darstellung der vorausberechneten Flugbahn durch mindestens einen Körper links und durch mindestens einen Körper rechts der Flugbahn erfolgt, die sich längs der Flugbahn erstrecken.

Eine räumliche Darstellung bei dem erfindungsgemäßen Verfahren kann sowohl eine perspektivische Darstellung auf einer ebenen Bildwiedergabeeinrichtung (Bildschirm) als auch eine stereoskopische Darstellung nach an sich bekannten Verfahren sein. Angaben zu der Form und Größe der Darstellungen beziehen sich auf die Verhältnisse in der Realität und sind im Falle von Richtungsangaben (links, rechts) in Flugrichtung zu verstehen.

Die Länge der Körper kann derjenigen Strecke entsprechen, welche das Flugzeug in einigen Sekunden zurücklegt - beispielsweise in 5 s. Damit ist die Länge der Körper von der Fluggeschwindigkeit abhängig.

Vorteilhafte Ausgestaltungen des erfindungsgemäßen Verfahrens bestehen darin, daß der Abstand der Körper voneinander etwa der Spannweite des Flugzeugs entspricht und daß ein oberer Rand des Körpers etwa in Augenhöhe des Piloten und ein unterer Rand etwa in der Höhe des unteren Punktes des ausgefahrenen Fahrwerks liegt.

Bei diesen Ausgestaltungen wird einerseits ein Bezug zur Realität beibehalten, der dem Piloten eine Informationsverarbeitung des auf dem Bildschirm Gesehenen erleichtert. Andererseits sind die gemäß diesen Ausgestaltungen vorgenommenen Darstellungen bezüglich ihrer Lage und Größe bei dem gegebenen Betrachtungsabstand und der Auflösung der Bildwiedergabeeinrichtung noch leicht räumlich erkennbar, ohne zuviel Fläche vom Gelände abzudecken.

Zur weiteren Verbesserung des räumlichen Eindrucks kann gemäß einer anderen vorteilhaften Ausgestaltung vorgesehen sein, daß über den links und rechts der Flugbahn dargestellten Körpern jeweils ein weiterer sich längs der Flugbahn erstreckender Körper dargestellt ist.

Eine Unterscheidung von anderen auf dem Bildschirm dargestellten Objekten ist in vorteilhafter Weise dadurch möglich, daß die Körper einen Querschnitt in Form eines rechtwinkligen Dreiecks oder einen L-förmigen Querschnitt aufweisen.

Zur besseren Erkennung der Länge bzw. in Blickrichtung gesehen der Tiefe der dargestellten Körper kann vorgesehen sein, daß die Körper in Längsrichtung in mehrere Teilkörper unterteilt sind. Diese Teilkörper können beispielsweise gerade sein und nach dem Teilstück der vorausberechneten Flugbahn, neben welcher sie dargestellt sind, ausgerichtet sein.

Diese Weiterbildung kann derart ausgestaltet sein, daß die Unterteilung durch die Formgebung der Teilkörper oder durch die Farbe der Teilkörper sichtbar ist, wobei vorzugsweise die Farbe jeweils eines Teilkörpers in Längsrichtung verlaufend ist.

Bei der Aufteilung der Körper in Teilkörper können unterschiedliche Fluggeschwindigkeiten dem Piloten dadurch vermittelt werden, daß zwischen den Teilkörpern Abstände vorgesehen sind, die mit zunehmender Fluggeschwindigkeit größer werden oder daß die Länge der Körper und/oder der Teilkörper mit größerwerdender Fluggeschwindigkeit zunimmt.

Eine Weiterbildung der Erfindung besteht darin, daß die Teilkörper bezüglich der Position und Lage nach der vorausberechneten Flugbahn berechnet werden und die jeweils ersten Teilkörper nach dem Steuerkurs und die folgenden Teilkörper nach dem Kurs über Grund ausgerichtet werden.

Zur Sichtbarmachung einer Warnung kann bei dem erfindungsgemäßen Verfahren vorgesehen sein, daß mindestens ein Farbwechsel mindestens eines Körpers oder Teilkörpers bei Annäherung des Flugzeugs an einen kritischen Zustand erfolgt. Dabei kann ein weiterer Farbwechsel erfolgen, wenn das Flugzeug einen kritischen Zustand erreicht hat.

Zur Durchführung des Verfahrens stehen geeignete Computer, Bildwiedergabegeräte und Sensoren zur Verfügung, wie sie beispielsweise in der Patentanmeldung P 39 30 862.6 beschrieben sind.

Eine vorteilhafte Einrichtung zur Darstellung von Flugführungsinformation eines Flugzeugs, wobei mit Hilfe einer Bildwiedergabeeinrichtung eine räumliche Darstellung des Flugraums mit mindestens einem Horizont und der vorausberechneten Flugbahn des Flugzeugs erfolgt und wobei die Darstellung der vorausberechneten Flugbahn die vorausberechnete Position und die vorausberechnete Lage des Flugzeugs zu verschiedenen Zeitpunkten umfaßt, ist dadurch gekennzeichnet, daß die Darstellung der vorausberechneten Flugbahn durch mindestens einen Körper links und durch mindestens einen Körper rechts der Flugbahn erfolgt, die sich längs der Flugbahn erstrecken.

Insbesondere kann die erfindungsgemäße Einrichtung derart ausgebildet sein, daß über den links und rechts der Flugbahn dargestellten Körpern jeweils ein weiterer sich längs der Flugbahn erstreckender Körper dargestellt ist. Dabei ist vorteilhaft, daß die Körper in Längsrichtung in mehrere Teilkörper unterteilt sind. Ferner kann die erfindungsgemäße Einrichtung zur Durchführung der erwähnten Weiterbildungen des erfindungsgemäßen Verfahrens eingerichtet sein.

### Kurze Beschreibung der Zeichnungen

Ausführungsbeispiele der Erfindung sind in der Zeichnung anhand mehrerer Figuren dargestellt und in der nachfolgenden Beschreibung näher erläutert. Es zeigt:
- Fig. 1: ein Schirmbild, in welchem neben weiteren Informationen eine Darstellung der vorausberechneten Flugbahn nach dem erfindungsgemäßen Verfahren erfolgt,
- Fig. 2: bis 5 Darstellungen der vorausberechneten Flugbahn mit Hilfe von verschieden ausgebildeten Körpern,
- Fig. 6: eine Darstellung der vorausberechneten Flugbahn mit Hilfe von vier Körpern, wobei die Teilkörper jeweils voneinander beabstandet sind,
- Fig. 7: die Darstellung einer gekrümmten vorausberechneten Flugbahn und
- Fig. 8: eine Seitenansicht eines Flugzeugs und der in die Realität transformierten Körper.

### Wege zur Ausführung der Erfindung

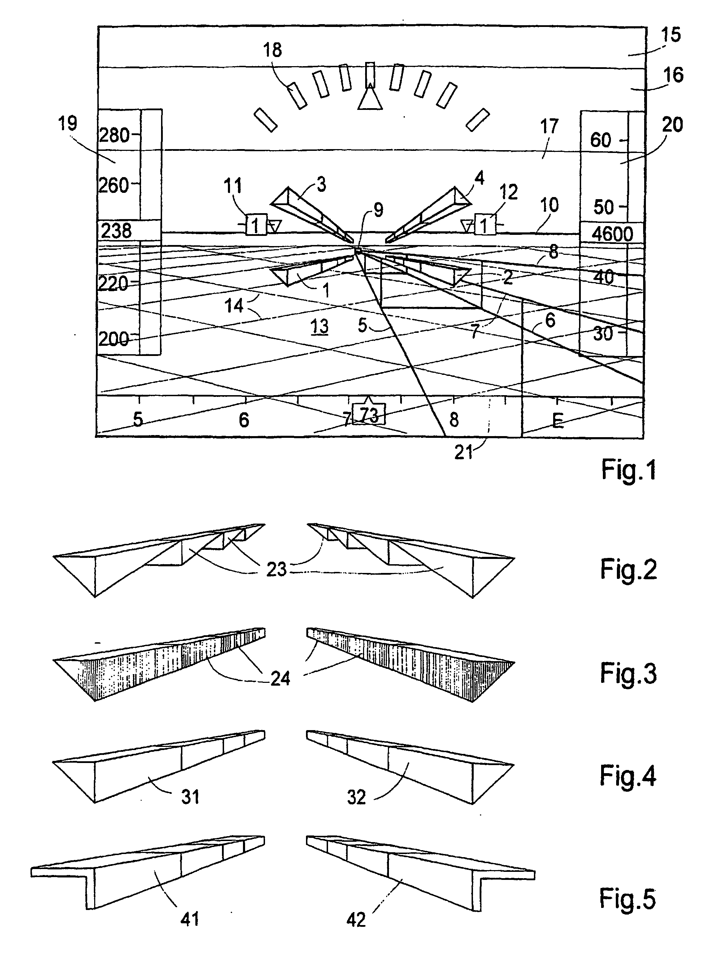

Die auf dem Schirmbild gemäß Fig. 1 dargestellte Flugsituation entspricht einem Landeanflug, wobei die vorausberechnete Flugbahn mit Hilfe von vier Körpern 1, 2, 3, 4 und Geraden 5, 6, 7, 8 als Grenzen eines Anflugkanals, welchem sich das Flugzeug nähert, dargestellt sind. Bei weiterem Geradeausflug würde das Flugzeug neben der lediglich als Rechteck 9 dargestellten Landebahn aufsetzen.

Eine Linie 10 stellt den Horizont dar, wobei Rechtecke 11, 12 mit ihrem Abstand zum Horizont 10 und mit den innerhalb der Rechtecke sichtbaren Ziffern den Nickwinkel anzeigen. Das Gelände 13 ist mit einem Gitter 14 versehen, das in Nord-Süd-Richtung ausgerichtet ist. Der Himmel ist in Form von Streifen 15, 16, 17 mit verschiedenem Farbton (in Fig. 1 nicht sichtbar, dunkleres und helleres Blau) dargestellt, um eine weitere Information über den Nickwinkel zu erhalten. Das Gelände 13 ist vorzugsweise grün oder braun dargestellt. Für die Körper 1 bis 4, die im folgenden auch Prädiktor genannt werden, sind Farben und Helligkeitswerte vorgesehen, die sich sowohl vom Himmel als auch vom Gelände abheben.

Die weiteren auf dem Schirmbild gemäß Fig. 1 sichtbaren Anzeigen, insbesondere eine Rollwinkelanzeige 18, eine Geschwindigkeitsanzeige 19, eine Höhenanzeige 20 und eine Kursanzeige 21, sind an sich bekannt und brauchen im einzelnen zum Verständnis der Erfindung nicht näher erläutert zu werden.

Der in Fig. 1 dargestellte Prädiktor weist in mehrere Teilkörper aufgeteilte Körper 1 bis 4 auf. Eine Unterteilung mit einzelnen Linien, wie sie bei der Darstellung in Fig. 1 vorgenommen wurde, ist jedoch wegen der Auflösungsgrenzen der Bildwiedergabeanordnung und des menschlichen Auges bei dem gegebenen Betrachtungsabstand nicht deutlich sichtbar, insbesondere bei den am weitesten entfernten Teilkörpern. Deshalb ist bei einer vorteilhaften Ausgestaltung des erfindungsgemäßen Verfahrens die Aufteilung in Teilkörper durch ihre Formgebung oder durch einen Farbverlauf vorgesehen. Ein Beispiel für eine Formgebung der Teilkörper 23 ist in Fig. 3 dargestellt, während durch eine veränderliche Schraffurdichte in Fig. 4 ein Farbverlauf der Teilkörper 24 veranschaulicht ist.

Die Figuren 4 und 5 zeigen jeweils einen Prädiktor aus zwei Körpern 31, 32 bzw. 33, 34 mit verschiedenem Querschnitt. Bei dem Querschnitt nach Fig. 5 bildet der jeweils senkrechte Schenkel etwa das Fahrwerk nach, während die waagerechten Schenkel die Tragflächen symbolisieren.

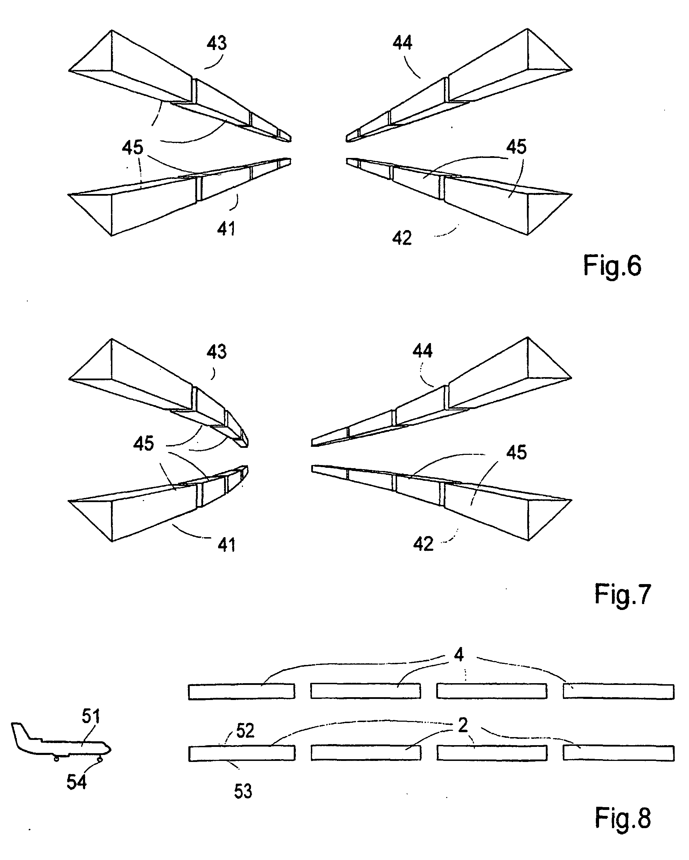

Fig. 6 zeigt einen Prädiktor aus vier Körpern 41 bis 44, die jeweils voneinander beabstandete Teilkörper 45 aufweisen. Den gleichen Prädiktor stellt Fig. 7 beim Fliegen einer Kurve dar.

Bei der in Fig. 8 dargestellten Seitenansicht eines Flugzeugs 51 und der in die Realität transformierten Körper 2, 4 ist die Höhe des Körpers 2 und des in Fig. 8 nicht sichtbaren Körpers auf der linken Seite der Flugbahn derart gewählt, daß die obere Kante 52 etwa in Augenhöhe des Piloten liegt, während die untere Kante die Höhe der Aufstandsfläche des Rades 54 einnimmt.

## Patentansprüche

1. Verfahren zur Darstellung von Flugführungsinformation eines Flugzeugs, wobei mit Hilfe einer Bildwiedergabeeinrichtung eine räumliche Darstellung des Flugraums mit mindestens einem Horizont (10) und der vorausberechneten Flugbahn (1, 2, 3, 4) des Flugzeugs erfolgt und wobei die Darstellung der vorausberechneten Flugbahn die vorausberechnete Position und die vorausberechnete Lage des Flugzeugs zu verschiedenen Zeitpunkten umfaßt, **dadurch gekennzeichnet, daß** die Darstellung der vorausberechneten Flugbahn durch mindestens einen Körper (1) links und durch mindestens einen Körper (2) rechts der Flugbahn erfolgt, die sich längs der Flugbahn erstrecken.

2. Verfahren nach Anspruch 1, **dadurch gekennzeichnet, daß** der Abstand der Körper (1, 2) voneinander etwa der Spannweite des Flugzeugs entspricht.

3. Verfahren nach einem der Ansprüche 1 oder 2, **dadurch gekennzeichnet, daß** ein oberer Rand (52) der Körper (1, 2) etwa in Augenhöhe des Piloten und ein unterer Rand (53) etwa in der Höhe des unteren Punktes des ausgefahrenen Fahrwerks (54) liegt.

4. Verfahren nach einem der Ansprüche 1 bis 3, **dadurch gekennzeichnet, daß** über den links und rechts der Flugbahn dargestellten Körpern (1, 2) jeweils ein weiterer sich längs der Flugbahn erstreckender Körper (3, 4) dargestellt ist.

5. Verfahren nach einem der vorhergehenden Ansprüche, **dadurch gekennzeichnet, daß** die Körper (31, 32) einen Querschnitt in Form eines rechtwinkligen Dreiecks aufweisen.

6. Verfahren nach einem der vorhergehenden Ansprüche, **dadurch gekennzeichnet, daß** die Körper (41, 42) einen L-förmigen Querschnitt aufweisen.

7. Verfahren nach einem der vorhergehenden Ansprüche, **dadurch gekennzeichnet, daß** die Körper in Längsrichtung in mehrere Teilkörper (23, 24, 45) unterteilt sind.

8. Verfahren nach Anspruch 7, **dadurch gekennzeichnet, daß** die Unterteilung durch die Formgebung der Teilkörper (23) sichtbar ist.

9. Verfahren nach Anspruch 7, **dadurch gekennzeichnet, daß** die Unterteilung durch die Farbe der Teilkörper (24) sichtbar ist.

10. Verfahren nach Anspruch 9, **dadurch gekennzeichnet, daß** die Farbe jeweils eines Teilkörpers (24) in Längsrichtung verlaufend ist.

11. Verfahren nach einem der Ansprüche 7 bis 10, **dadurch gekennzeichnet, daß** zwischen den Teilkörpern (45) Abstände vorgesehen sind, die mit zunehmender Fluggeschwindigkeit größer werden.

12. Verfahren nach einem der Ansprüche 7 bis 11, **dadurch gekennzeichnet, daß** die Teilkörper (23, 24, 45) bezüglich der Position und Lage nach der vorausberechneten Flugbahn berechnet werden und die jeweils ersten Teilkörper nach dem Steuerkurs und die folgenden Teilkörper nach dem Kurs über Grund ausgerichtet werden.

13. Verfahren nach einem der vorhergehenden Ansprüche, **dadurch gekennzeichnet, daß** die Länge der Körper (1, 2, 3, 4) und/oder der Teilkörper (23, 24, 45) mit größerwerdender Fluggeschwindigkeit zunimmt.

14. Verfahren nach einem der vorhergehenden Ansprüche, **dadurch gekennzeichnet, daß** mindestens ein Farbwechsel mindestens eines Körpers (1, 2, 3, 4) oder Teilkörpers (23, 24, 45) bei Annäherung des Flugzeugs an einen kritischen Zustand erfolgt.

15. Verfahren nach Anspruch 14, **dadurch gekennzeichnet, daß** ein weiterer Farbwechsel erfolgt, wenn das Flugzeug einen kritischen Zustand erreicht hat.

16. Einrichtung zur Darstellung von Flugführungsinformation eines Flugzeugs, wobei mit Hilfe einer Bildwiedergabeeinrichtung eine räumliche Darstellung des Flugraums mit mindestens einem Horizont (10) und der vorausberechneten Flugbahn (1, 2, 3, 4) des Flugzeugs erfolgt und wobei die Darstellung der vorausberechneten Flugbahn die vorausberechnete Position und die vorausberechnete Lage des Flugzeugs zu verschiedenen Zeitpunkten umfaßt, **dadurch gekennzeichnet, daß** die Darstellung der vorausberechneten Flugbahn durch mindestens einen Körper (1) links und durch mindestens einen Körper (2) rechts der Flugbahn erfolgt, die sich längs der Flugbahn erstrecken.

17. Einrichtung nach Anspruch 16, **dadurch gekennzeichnet, daß** über den links und rechts der Flugbahn dargestellten Körpern (1, 2) jeweils ein weiterer sich längs der Flugbahn erstreckender Körper (3, 4) dargestellt ist.

18. Einrichtung nach einem der Ansprüche 16 oder 17, **dadurch gekennzeichnet, daß** die Körper in Längsrichtung in mehrere Teilkörper (23, 24, 45) unterteilt sind.

## Claims

1. A method of displaying flight guidance information of an aircraft, wherein a spatial display of the air space, comprising at least one horizon (10) and the precalculated flight path (1, 2, 3, 4) of the aircraft, is effected by means of an image reproduction device, and wherein the display of the precalculated flight path comprises the precalculated position and the precalculated location of the aircraft at different times, **characterised in that** the display of the precalculated flight path is effected by at least one body (1) on the left of the flight path and by at least one body (2) on the right of the flight path, which bodies extend along the flight path.

2. A method according to claim 1, **characterised in that** the distance of the bodies (1, 2) from each other approximately corresponds to the wing span of the aircraft.

3. A method according to either one of claims 1 or 2, **characterised in that** an upper edge (52) of the bodies (1, 2) is situated approximately at the eye level of the pilot and a lower edge (53) is situated approximately at the bottom point of the extended landing gear (54).

4. A method according to any one of claims 1 to 3, **characterised in that** a further body (3, 4) which extends along the flight path is displayed above each of the bodies (1, 2) displayed on the left and right of the flight path.

5. A method according to any one of the preceding claims, **characterised in that** the bodies (31, 32) have a cross-section in the form of a right-angled triangle.

6. A method according to any one of the preceding claims, **characterised in that** the bodies (41, 42) have an L-shaped cross-section.

7. A method according to any one of the preceding claims, **characterised in that** the bodies are subdivided in the longitudinal direction into a plurality of component bodies (23, 24, 45).

8. A method according to claim 7, **characterised in that** the subdivision is visible due to the design of the component bodies (23).

9. A method according to claim 7, **characterised in that** the subdivision is visible due to the colour of the component bodies (24).

10. A method according to claim 9, **characterised in that** the colour of each component body (24) is continuous in the longitudinal direction.

11. A method according to any one of claims 7 to 10, **characterised in that** spacings which become larger with increasing flying speed are provided between the component bodies (45).

12. A method according to any one of claims 7 to 11, **characterised in that** the position and location of the component bodies (23, 24, 45) are calculated according to the precalculated flight path, and the first component bodies in each case are aligned according to the heading and the following component bodies are aligned according to the course over the ground.

13. A method according to any one of the preceding claims, **characterised in that** the length of the bodies (1, 2, 3, 4) and/or of the component bodies (23, 24, 45) increases with increasing flying speed.

14. A method according to any one of the preceding claims, **characterised in that** at least one colour change of at least one body (1, 2, 3, 4) or component body (23, 24, 25) occurs when the aircraft approaches a critical situation.

15. A method according to claim 14, **characterised in that** a further colour change occurs when the aircraft has reached a critical situation.

16. A device for displaying flight guidance information of an aircraft, wherein a spatial display of the airspace, comprising at least one horizon (10) and the precalculated flight path (1, 2, 3, 4) of the aircraft, is effected by means of an image reproduction device, and wherein the display of the precalculated flight path comprises the precalculated position and the precalculated location of the aircraft at different times, **characterised in that** the display of the precalculated flight path is effected by at least one body (1) on the left of the flight path and by at least one body (2) on the right of the flight path, which bodies extend along the flight path.

17. A device according to claim 16, **characterised in that** a further body (3, 4), which extends along the flight path, is displayed above each of the bodies (1, 2) which are displayed on the left and right of the flight path.

18. A device according to either one of claims 16 or 17, **characterised in that** the bodies are subdivided in the longitudinal direction into a plurality of component bodies (23, 24, 25).

## Revendications

1. Procédé pour la représentation des informations du guidage du vol d'un avion, moyennant quoi, avec l'aide d'un dispositif de reproduction des images, est effectuée une représentation spatiale de l'espace aérien avec au moins un horizon (10) et la trajectoire préalablement calculée (1, 2, 3, 4) de l'avion et moyennant quoi la représentation de la trajectoire préalablement calculée comprend à différents instants la position préalablement calculée et la situation de l'avion préalablement calculée, **caractérisé en ce que** la représentation de la trajectoire de vol préalablement calculée s'effectue avec au moins un corps (1) à gauche et avec au moins un corps (2) à droite de la trajectoire de vol, lesquels corps s'étendent le long de la trajectoire de vol.

2. Procédé selon la revendication 1, **caractérisé en ce que** l'écart entre les corps (1, 2) correspond à peu près à l'envergure de l'avion.

3. Procédé selon la revendication 1 ou 2, **caractérisé en ce qu'**un bord supérieur (52) des corps (1, 2) se situe à peu près à la hauteur des yeux du pilote et **en ce qu'**un bord inférieur (53) se situe à peu près à la hauteur du point inférieur du train d'atterrissage sorti (54).

4. Procédé selon l'une des revendications 1 à 3, **caractérisé en ce qu'**au-dessus des corps (1, 2) représentés à gauche et à droite de la trajectoire de vol, il est représenté à chaque fois un corps supplémentaire (3, 4) qui s'étend le long de la trajectoire.

5. Procédé selon l'une des revendications précédentes, **caractérisé en ce que** les corps (31, 32) comportent une section ayant la forme d'un triangle rectangulaire.

6. Procédé selon l'une des revendications précédentes, **caractérisé en ce que** les corps (41, 42) comportent une section en forme de L.

7. Procédé selon l'une des revendications précédentes, **caractérisé en ce que** les corps sont découpés en plusieurs segments (23, 24, 45).

8. Procédé selon la revendication 7, **caractérisé en ce que** la segmentation est visible en raison du modelé des segments (23).

9. Procédé selon la revendication 7, **caractérisé en ce que** la segmentation est visible en raison de la couleur des segments (24).

10. Procédé selon la revendication 9, **caractérisé en ce que** la couleur d'un segment (24) s'étend en direction longitudinale.

11. Procédé selon l'une des revendications 7 à 10, **caractérisé en ce qu'**entre les segments (45), il est prévu des écartements, lesquels grandissent lorsque la vitesse de vol s'accroît.

12. Procédé selon l'une des revendications 7 à 11, **caractérisé en ce que** les segments (23, 24, 45) sont calculés en fonction de la position et de la situation de là trajectoire de vol préalablement calculée et **en ce que** les premiers segments correspondants sont orientés en fonction de l'angle de cap et que les segments suivants sont orientés en fonction de la route.

13. Procédé selon l'une des revendications précédentes, **caractérisé en ce que** les longueurs des corps (1, 2, 3, 4) et / ou des segments (23, 24, 45) augmentent lorsque la vitesse de vol s'accroît.

14. Procédé selon l'une des revendications précédentes, **caractérisé en ce qu'**il s'effectue au moins un changement de couleur d'au moins un corps (1, 2, 3, 4) ou d'un segment (23, 24, 45) lorsque l'avion s'approche d'un état critique.

15. Procédé selon la revendication 14, **caractérisé en ce qu'**il s'effectue un autre changement de couleur lorsque l'avion a atteint un état critique.

16. Dispositif pour la représentation des informations du guidage du vol d'un avion, moyennant quoi, avec l'aide d'un dispositif de reproduction des images, est effectuée une représentation spatiale de l'espace aérien avec au moins un horizon (10) et la trajectoire préalablement calculée (1, 2, 3, 4) de l'avion et moyennant quoi la représentation de la trajectoire préalablement calculée comprend à différents instants la position préalablement calculée et la situation de l'avion préalablement calculée, **caractérisé en ce que** la représentation de la trajectoire de vol préalablement calculée s'effectue avec au moins un corps (1) à gauche et avec au moins un corps (2) à droite de la trajectoire de vol, lesquels corps s'étendent le long de la trajectoire de vol.

17. Dispositif selon la revendication 16, **caractérisé en ce que**, au-dessus des corps (1, 2) représentés à gauche et à droite de la trajectoire de vol, il est représenté un corps supplémentaire s'étendant le long de la trajectoire de vol.

18. Dispositif selon l'une des revendications 16 ou 17, **caractérisé en ce que** les corps sont segmentés en direction longitudinale en plusieurs segments (23, 24, 45).
